# EUROPEAN PATENT APPLICATION

(11) **EP 4 738 555 A1**
(43) Date of publication of application: **06.05.2026**
(21) Application number: 24832150.7
(22) Date of filing: 28.06.2024
(51) Int. Cl.: H01M 50/169, H01G 11/80, H01M 50/105, H01M 50/119, H01M 50/15, H01M 50/159

(54) **POWER STORAGE DEVICE, EXTERIOR FILM, AND METHOD FOR MANUFACTURING POWER STORAGE DEVICE**

(30) Priority: 28.06.2023 JP 2023106543
(71) Applicant: Dai Nippon Printing Co., Ltd., Tokyo 162-8001 (JP)
(72) Inventor: KANAZAWA, Sayako, Tokyo 162-8001 (JP); MIYASHIRO, Kae, Tokyo 162-8001 (JP); URIU, Toshibumi, Tokyo 162-8001 (JP); SASAKI, Miho, Tokyo 162-8001 (JP)
(74) Representative: Müller-Boré & Partner Patentanwälte PartG mbB
(86) International application number: PCT/JP2024/023658
(87) International publication number: WO 2025/005294

(57) **Abstract**

This electric power storage device comprises an electrode body and an exterior body that seals the electrode body. The exterior body has: an exterior film that wraps the electrode body; and a lid body that seals the electrode body together with the exterior film. The exterior film includes a barrier layer including a metal material. The lid body includes a portion containing a metal material. The barrier layer of the exterior film and the portion including the metal material of the lid body are directly bonded to each other.

## Description

### Technical Field

The present invention relates to an electrical storage device, an outer package film, and a method for manufacturing an electrical storage device.

### Background Art

PTL 1 discloses an example of an electrical storage device. The electrical storage device includes an electrode assembly and an outer packaging that seals the electrode assembly. The outer packaging includes an outer package film wrapping the electrode assembly and a lid joined to the outer package film. The outer package film and the lid are joined by heat sealing.

### Citation List

### Patent Literature

PTL 1: Japanese Patent Laid-open Publication No. 2022-123686

### Summary of Invention

### Technical Problem

In the electrical storage device, moisture may ingress the inside of the outer packaging from between the outer package film and the lid. Therefore, there is still room for improvement in the moisture barrier property of the electrical storage device.

An object of the present invention is to provide an electrical storage device having a high moisture barrier property, an outer package film used for the electrical storage device, and a method for manufacturing the electrical storage device.

### Solution to Problem

An electrical storage device according to a first aspect of the present invention includes: an electrode assembly; and an outer packaging that seals the electrode assembly, in which the outer packaging includes: an outer package film that wraps the electrode assembly; and a lid that seals the electrode assembly together with the outer package film, the outer package film includes a barrier layer containing a metal material, the lid includes a portion containing a metal material, and the barrier layer of the outer package film and the portion containing a metal material of the lid are directly joined.

An electrical storage device according to a second aspect of the present invention is the electrical storage device according to the first aspect, in which a portion of the outer package film joined to the portion containing a metal material of the lid is a single layer of the barrier layer.

An electrical storage device according to a third aspect of the present invention is the electrical storage device according to the first aspect, in which the outer package film includes another layer laminated on the barrier layer, and a portion of the outer package film joined to the portion containing a metal material of the lid is a portion where the barrier layer is partially exposed from the other layer.

An electrical storage device according to a fourth aspect of the present invention is the electrical storage device according to any one of the first to third aspects, in which the lid includes: a cover; and a lid main body joined to the cover, at least one of the cover and the lid main body contains a metal material, the outer packaging includes a seal portion where the outer package film is sandwiched between the cover and the lid main body, and in the seal portion, the barrier layer of the outer package film is directly joined to a portion containing a metal material of the cover and the lid main body.

An outer package film according to a fifth aspect of the present invention is an outer package film used as an outer packaging of an electrical storage device, in which the outer packaging includes a lid containing a metal material, the outer package film includes a barrier layer containing a metal material, and a portion joined to a portion containing a metal material of the lid is a single layer of the barrier layer, or a portion where the barrier layer is partially exposed from another layer.

A method for manufacturing an electrical storage device according to a sixth aspect of the present invention is a method for manufacturing an electrical storage device including: an electrode assembly; and an outer packaging that seals the electrode assembly, the outer packaging including: an outer package film that wraps the electrode assembly; and a lid that seals the electrode assembly together with the outer package film, the outer package film including a barrier layer containing a metal material, and the lid including a portion containing a metal material. The method for manufacturing an electrical storage device includes a step of directly joining the barrier layer of the outer package film and the portion containing a metal material of the lid.

### Advantageous Effects of Invention

According to the electrical storage device, the outer package film, and the method for manufacturing an electrical storage device of the present invention, the moisture barrier property is high.

### Brief Description of Drawings

[Fig. 1] Fig. 1 is a perspective view of an electrical storage device according to an embodiment.
[Fig. 2] Fig. 2 is a sectional view showing an example of a layer configuration of an outer package film included in the electrical storage device of Fig. 1.
[Fig. 3] Fig. 3 is a view in which the outer package film of the electrical storage device of Fig. 1 is unfolded.
[Fig. 4A] Fig. 4A is a perspective view of a cover included in the electrical storage device of Fig. 1.
[Fig. 4B] Fig. 4B is a sectional view taken along line D4B-D4B in Fig. 4A.
[Fig. 5] Fig. 5 is a perspective view of a lid main body included in the electrical storage device of Fig. 1.
[Fig. 6] Fig. 6 is a front view of the electrical storage device of Fig. 1.
[Fig. 7] Fig. 7 is a sectional view taken along line D7-D7 in Fig. 1.
[Fig. 8] Fig. 8 is a flowchart showing an example of a method for manufacturing the electrical storage device of Fig. 1.
[Fig. 9] Fig. 9 is a sectional view of an electrical storage device of a first modification.
[Fig. 10] Fig. 10 is a sectional view of an electrical storage device of a second modification.
[Fig. 11] Fig. 11 is a sectional view of an electrical storage device of a third modification.
[Fig. 12] Fig. 12 is a sectional view of an electrical storage device of another example of the third modification.
[Fig. 13] Fig. 13 is a sectional view showing an example of a layer configuration of an outer package film 50 included in an electrical storage device of a fourth modification. Description of Embodiments

Hereinafter, an electrical storage device according to an embodiment of the present invention will be described with reference to the drawings. Note that, in this specification, a numerical range indicated by the term "A to B" means "A or more" and "B or less". For example, the notation 2 to 15 mm means 2 mm or more and 15 mm or less.

### [1. Embodiment]

### <1-1. Configuration of electrical storage device>

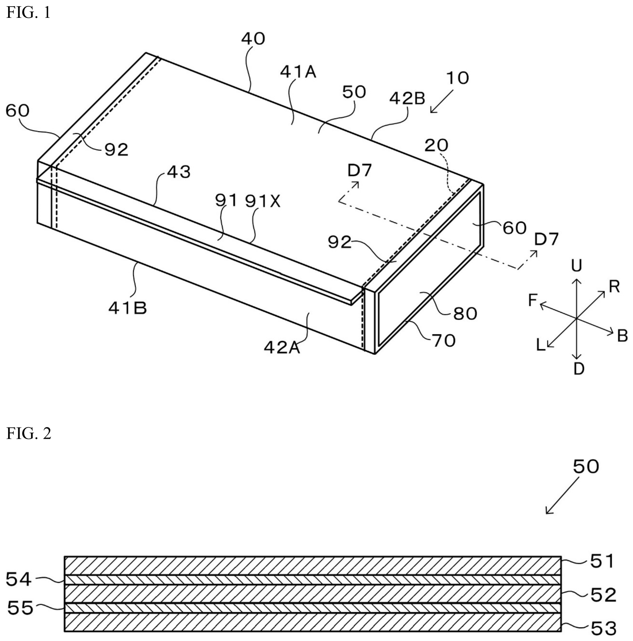

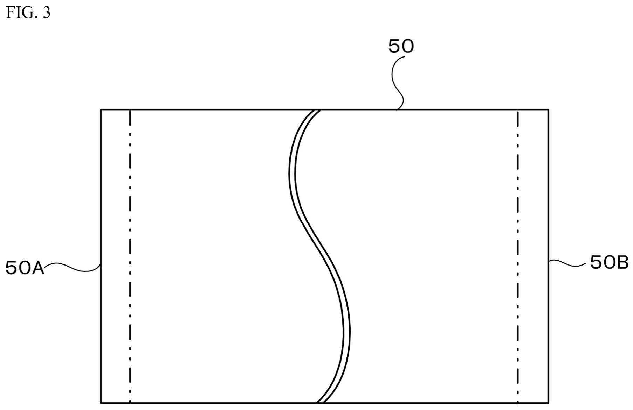

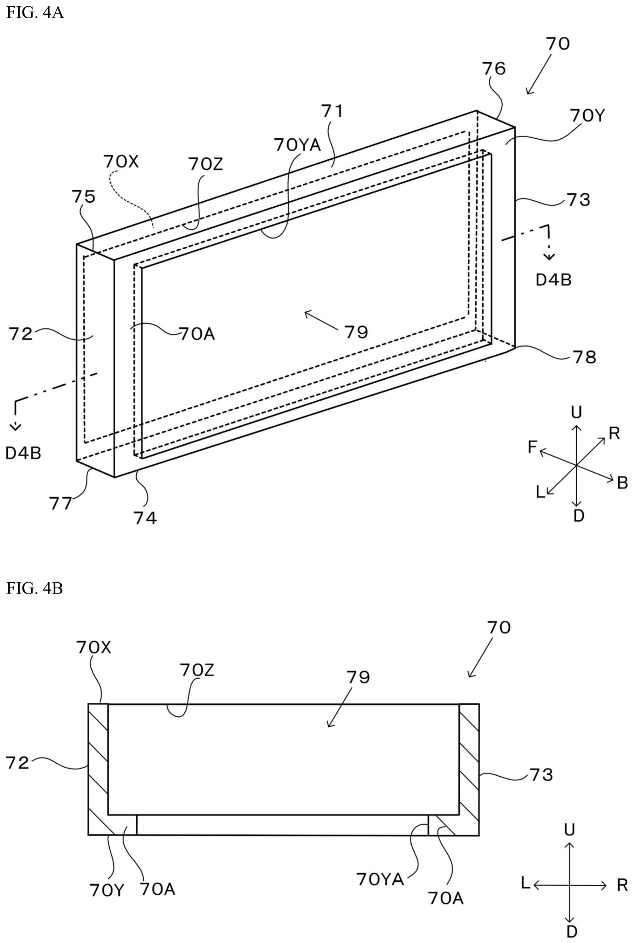

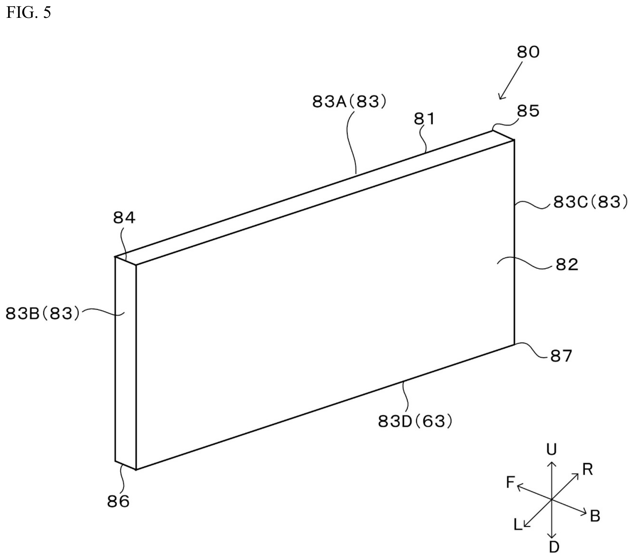

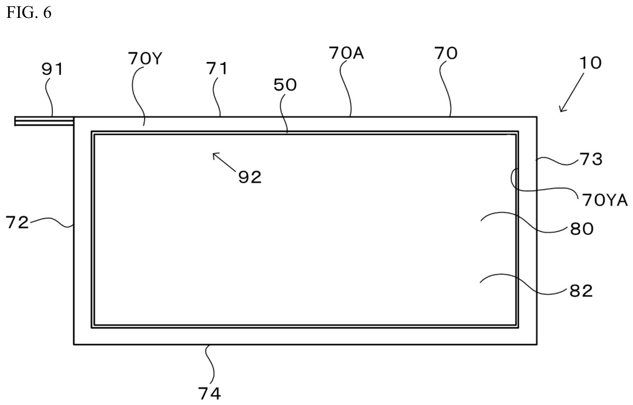

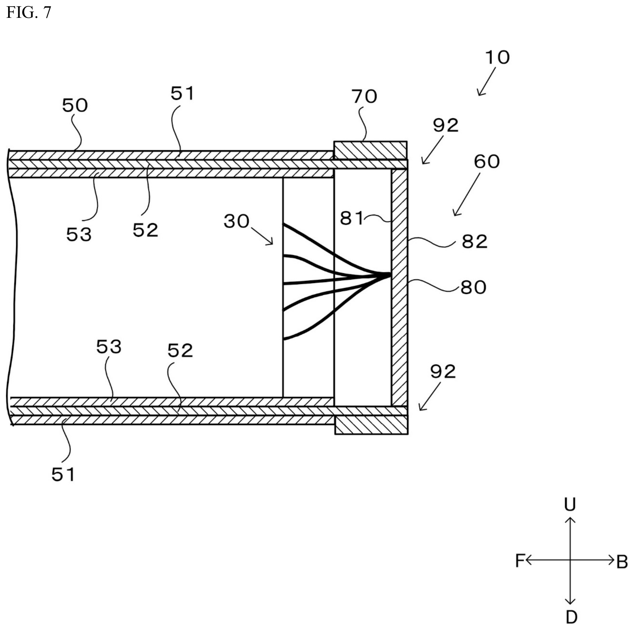

Fig. 1 is a perspective view schematically showing an electrical storage device 10 of an embodiment. Fig. 2 is a sectional view showing a layer configuration of the outer package film 50 included in the electrical storage device 10 in Fig. 1. Fig. 3 is a view in which the outer package film 50 of the electrical storage device 10 of Fig. 1 is unfolded. Fig. 4A is a perspective view of a cover 70 included in the electrical storage device 10 of Fig. 1. Fig. 4B is a sectional view taken along line D4B-D4B in Fig. 4A. Fig. 5 is a perspective view of a lid main body 80 included in the electrical storage device 10 in Fig. 1. Fig. 6 is a front view of the electrical storage device 10 of Fig. 1. Fig. 7 is a sectional view taken along line D7-D7 in Fig. 1. In Fig. 1, the direction along arrow UD indicates a thickness direction of the electrical storage device 10, the direction along arrow LR indicates a width direction of the electrical storage device 10, and the direction along arrow FB indicates a depth direction of the electrical storage device 10. The direction indicated by each of arrows UD, LR, and FB is also shared across the subsequent drawings.

The electrical storage device 10 includes an electrode assembly 20 including a current collector 30 (see Fig. 7), and an outer packaging 40. The electrode assembly 20 includes, for example, a lithium ion battery, a capacitor, a lithium ion polymer battery, an all-solid-state battery, a semi-solid-state battery, a pseudo-solid-state battery, a polymer battery, an all-polymer battery, a lead storage battery, a nickel-hydrogen storage battery, a nickelcadmium storage battery, a nickel-iron storage battery, a nickel-zinc storage battery, a silver oxide-zinc storage battery, a metal-air battery, a polyvalent cation battery, or electrodes (positive electrode and negative electrode) constituting an electrical storage member such as a capacitor, and a separator. In the present embodiment, the shape of the electrode assembly 20 is substantially a cuboid. Note that the "substantially cuboid" includes a perfect cuboid and also a solid that can be seen as a cuboid by modifying the shape of a part of the outer surface thereof, for example. The shape of the electrode assembly 20 may be, for example, a cylinder or a polygonal prism.

The outer packaging 40 seals the electrode assembly 20. The outer packaging 40 includes the outer package film 50 and the lid 60. In the present embodiment, the outer package film 50 is wound around the electrode assembly 20. The electrode assembly 20 may be housed in the outer package film 50 formed in a cylindrical shape. The outer packaging 40 has a pair of first surfaces 41A and 41B and a pair of second surfaces 42A and 42B. In the present embodiment, the pair of first surfaces 41A and 41B has substantially the same size. In the present embodiment, the pair of second surfaces 42A and 42B has substantially the same size. The area of the pair of first surfaces 41A and 41B is larger than the area of the pair of second surfaces 42A and 42B. A pair of the lids 60 is disposed on the sides of the electrode assembly 20.

For example, there is a method in which a recess for housing the electrode assembly 20 is formed in the outer package film 50 through cold molding. However, it is not always easy to form a deep recess by such a method. When an attempt is made to form a deep (for example, 15 mm in terms of molding depth) recess by cold molding, pinholes or cracks are generated in the outer package film 50, leading to a rise in possibility that battery performance is degraded. On the other hand, since the outer packaging 40 seals the electrode assembly 20 by winding the outer package film 50 around the electrode assembly 20, the electrode assembly 20 can be easily sealed regardless of the thickness of the electrode assembly 20. Note that, for reducing a dead space between the electrode assembly 20 and the outer package film 50 in order to improve the volume energy density of the electrical storage device 10, it is preferable that the outer package film 50 is wound in a state of being in contact with the outer surface of the electrode assembly 20. In an all-solid-state battery, it is necessary to eliminate the space between the electrode assembly 20 and the outer package film 50 from the viewpoint that it is necessary to uniformly apply a high pressure from the outer surface of the battery for exhibiting battery performance, and therefore, the state where the outer package film 50 is in contact with and is wound around the outer surface of the electrode assembly 20 is preferable.

As shown in Fig. 2, the outer package film 50 is, for example, a laminate (laminate film) including a base material layer 51, a barrier layer 52, and a heat-sealable resin layer 53 in the stated order. The outer package film 50 is not required to include all these layers, and may include at least the barrier layer 52. In other words, the outer package film 50 is only required to be formed from a material that is flexible and easy to bend, and the outer package film 50 may be formed from, for example, a resin film. Note that the outer package film 50 is preferably heat-sealable. In the outer package film 50, the innermost layer and the outermost layer may be the heat-sealable resin layers 53. In this case, the outer package film 50 may wrap the electrode assembly 20 and the lid 60 by the outermost layer and the innermost layer being joined to each other.

The entire thickness of the outer package film 50 can be arbitrarily selected. From the viewpoint of strength, the thickness of the outer package film 50 is preferably 50 µm or more. From the viewpoint of moldability or followability, the thickness of the outer package film 50 is preferably 1200 µm or less. The thickness of the outer package film 50 is preferably in the range of 50 µm or more and 1200 µm or less.

The base material layer 51 included in the outer package film 50 is a layer for imparting heat resistance to the outer package film 50 to suppress generation of pinholes which may occur during processing or distribution. The base material layer 51 includes, for example, at least one layer of a stretched polyester resin layer and a stretched polyamide resin layer. For example, by the base material layer 51 including at least one layer of a stretched polyester resin layer and a stretched polyamide resin layer, the barrier layer 52 can be protected during processing of the outer package film 50 to suppress breakage of the outer package film 50. From the viewpoint of increasing the tensile elongation of the outer package film 50, the stretched polyester resin layer is preferably a biaxially stretched polyester resin layer, and the stretched polyamide resin layer is preferably a biaxially stretched polyamide resin layer. Further, from the viewpoint of excellent piercing strength or impact strength, the stretched polyester resin layer is more preferably a biaxially stretched polyethylene terephthalate (PET) film, and the stretched polyamide resin layer is more preferably a biaxially stretched nylon (ONy) film. Note that the base material layer 51 may include both a stretched polyester resin layer and a stretched polyamide resin layer. From the viewpoint of film strength, the thickness of the base material layer 51 is, for example, preferably 5 µm to 300 µm, more preferably 5 µm to 150 µm.

The barrier layer 52 is a layer which suppresses at least ingress of moisture. The barrier layer 52 is joined to, for example, the base material layer 51 with an adhesive layer 54 interposed therebetween. Examples of the barrier layer 52 include metal foils, deposited films, and resin layers having a barrier property. Examples of the deposited film include metal deposited films, inorganic oxide deposited films and carbon-containing inorganic oxide deposited films, and examples of the resin layer include those of polyvinylidene chloride, fluorine-containing resins such as polymers containing chlorotrifluoroethylene (CTFE) as a main component, polymers containing tetrafluoroethylene (TFE) as a main component, polymers having a fluoroalkyl group, and polymers containing a fluoroalkyl unit as a main component, and ethylene vinyl alcohol copolymers. Examples of the barrier layer 52 include resin films provided with at least one of these deposited films and resin layers. A plurality of barrier layers 52 may be provided. In the present embodiment, the barrier layer 52 includes a layer formed from a metal material. Specific examples of the metal material constituting the barrier layer 52 include aluminum alloys, stainless steel, titanium steel and steel sheets, and in a case where the metal material is used as a metal foil, it is preferable that the metal material includes at least one of an aluminum alloy foil and a stainless steel foil.

In the barrier layer 52, the layer formed from the metal material described above may contain a recycled metal material. Examples of the recycled metal material include recycled materials of an aluminum alloy, stainless steel, titanium steel, and a steel plate. These recycled materials can be each obtained by a known method. The recycled material of the aluminum alloy can be obtained by, for example, a manufacturing method described in International Publication No. WO 2022/092231. The barrier layer 52 may be formed only from a recycled material, or may be formed from a mixed material of a recycled material and a virgin material. Note that the recycled metal material is a metal material obtained by, for example, collecting, isolating and purifying various products used in a so-called commercial market, wastes from manufacturing processes, and the like, such that the material can be reused. The virgin material from a metal material is a new metal material obtained by refining a metal natural resource (raw material), which is not a recycled material.

The aluminum alloy foil is more preferably a soft aluminum alloy foil formed from, for example, an annealed aluminum alloy from the viewpoint of improving the moldability or followability of the outer package film 50, and is preferably an aluminum alloy foil containing iron from the viewpoint of further improving the moldability or the followability. In the aluminum alloy foil containing iron (100 mass%), the content of iron is preferably 0.1 to 9.0 mass%, more preferably 0.5 to 2.0 mass%. By the content of iron being 0.1 mass% or more, it is possible to obtain the outer package film 50 having more excellent moldability. By the content of iron being 9.0 mass% or less, it is possible to obtain the outer package film 50 having more excellent flexibility. If necessary, silicon, magnesium, copper, manganese or the like may be added. Softening can be performed by annealing or the like. From the viewpoint of improving mechanical strength of the outer package film 50, the aluminum alloy foil is more preferably a hard aluminum alloy foil formed from, for example, a work-hardened aluminum alloy. Examples of the hard aluminum alloy foil include aluminum alloy foils having a composition specified in JIS H4160: 1994 A8021H-H18, JIS H4160: 1994 A8079H-H18, JIS H4000: 2014 A8021P-H14, or JIS H4000: 2014 A8079P-H14. From the viewpoint of improving the mechanical strength of the outer package film 50, the aluminum alloy foil is preferably an aluminum alloy foil containing magnesium. In the aluminum alloy foil containing magnesium (100 mass%), the content of magnesium is preferably 0.2 to 5.6 mass%, and more preferably 0.2 to 3.0 mass%. Examples of the aluminum alloy foil containing magnesium include aluminum alloy foils having a composition specified in JIS H4000:2017 A5005P-O, JIS H4000:2017 A5050P-O, and JIS H4000:2017 A5052P-O.

Examples of the stainless steel foil include austenitic stainless steel foils, ferritic stainless steel foils, austenitic/ferritic stainless steel foils, martensitic stainless steel foils, and precipitation-hardened stainless steel foils. From the viewpoint of providing the outer package film 50 having further excellent moldability, it is preferable that the stainless steel foil is formed from austenitic stainless steel.

Specific examples of the austenitic stainless steel constituting the stainless steel foil include SUS304, SUS301, and SUS316L, and among these, SUS304 is especially preferable.

In a case where the barrier layer 52 is a metal foil, it is only necessary for the barrier layer 52 to exhibit a function as a barrier layer suppressing at least ingress of moisture, and the barrier layer 52 has a thickness of, for example, about 5 µm to 1000 µm. The thickness of the barrier layer 52 is preferably about 85 µm or less, more preferably about 50 µm or less, still more preferably about 40 µm or less, particularly preferably about 35 µm or less. Also, the thickness of the barrier layer 52 is preferably about 9.0 µm or more, more preferably about 20 µm or more, still more preferably about 25 µm or more. The thickness of the barrier layer 52 is preferably in the range of about 9.0 to 1000 µm, about 9.0 to 1000 µm, about 9.0 to 1000 µm, about 9.0 to 1000 µm, about 9.0 to 85 µm, about 9.0 to 50 µm, about 9.0 to 40 µm, about 9.0 to 35 µm, about 20 to 85 µm, about 20 to 50 µm, about 20 to 40 µm, about 20 to 35 µm, about 25 to 85 µm, about 25 to 50 µm, about 25 to 40 µm, or about 25 to 35 µm. In a case where the barrier layer 52 is formed from an aluminum alloy foil, the thickness thereof is especially preferably in above-described range. From the viewpoint of imparting high moldability and high rigidity to the outer package film 50, the thickness of the barrier layer 52 is preferably about 35 µm or more, more preferably about 45 µm or more, still more preferably about 50 µm or more, still more preferably about 55 µm or more, and preferably about 200 µm or less, more preferably about 85 µm or less, still more preferably about 75 µm or less, still more preferably about 70 µm or less, and is preferably in the range of about 35 to 200 µm, about 35 to 85 µm, about 35 to 75 µm, about 35 to 70 µm, about 45 to 200 µm, about 45 to 85 µm, about 45 to 75 µm, about 45 to 70 µm, about 50 to 200 µm, about 50 to 85 µm, about 50 to 75 µm, about 50 to 70 µm, about 55 to 200 µm, about 55 to 85 µm, about 55 to 75 µm, or about 55 to 70 µm. By the outer package film 50 having high moldability, deep drawing molding can be facilitated, which contributes to an increase in capacity of the electrical storage device. Although the weight of the electrical storage device increases when the capacity of the electrical storage device is increased, enhancement of the rigidity of the outer package film 50 can contribute to high sealing performance of the electrical storage device. In particular, when the barrier layer 52 is formed from a stainless steel foil, the thickness of the stainless steel foil is preferably about 60 µm or less, more preferably about 50 µm or less, still more preferably about 40 µm or less, still more preferably about 30 µm or less, particularly preferably about 25 µm or less. The thickness of the stainless steel foil is preferably about 10 µm or more, more preferably about 15 µm or more. The thickness of the stainless steel foil is preferably in the range of about 10 µm to 60 µm, about 10 µm to 50 µm, about 10 µm to 40 µm, about 10 µm to 30 µm, about 10 µm to 25 µm, about 15 µm to 60 µm, about 15 µm to 50 µm, about 15 µm to 40 µm, about 15 µm to 30 µm, or about 15 µm to 25 µm.

In a case where the barrier layer 52 is an aluminum foil, it is preferable that a corrosion-resistant film is provided at least on a surface on a side opposite to the base material layer 51 for prevention of dissolution, corrosion, and the like. The barrier layer 52 may include a corrosion-resistant film on each of both surfaces. Here, the corrosion-resistant film refers to a thin film obtained by subjecting the surface of the barrier layer 52 to, for example, hydrothermal denaturation treatment such as boehmite treatment, chemical conversion treatment, anodization treatment, plating treatment with nickel, chromium or the like, or corrosion prevention treatment by applying a coating agent to impart corrosion resistance (for example, acid resistance and alkali resistance) to the barrier layer 52. Specifically, the corrosion-resistant film means a film which improves the acid resistance of the barrier layer 52 (acid-resistant film), a film which improves the alkali resistance of the barrier layer 52 (alkali-resistant film), or the like. One of treatments for forming the corrosion-resistant film may be performed, or two or more kinds thereof may be performed in combination. Not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. Note that the definition of the chemical conversion treatment may include these treatments. In a case where the barrier layer 52 is provided with the corrosion-resistant film, the barrier layer 52 is regarded as including the corrosion-resistant film.

The corrosion-resistant film exhibits the effects of preventing delamination between the barrier layer 52 (e.g. an aluminum alloy foil) and the base material layer 51 during molding of the outer package film 50; preventing dissolution and corrosion of the surface of the barrier layer 52, particularly dissolution and corrosion of aluminum oxide present on the surface of the barrier layer 52 when the barrier layer 52 is an aluminum alloy foil, by hydrogen fluoride generated by reaction of an electrolyte with moisture; improving the bondability (wettability) of the surface of the barrier layer 52; preventing delamination between the base material layer 51 and the barrier layer 52 during heat-sealing; and preventing delamination between the base material layer 51 and the barrier layer 52 during molding.

The heat-sealable resin layer 53 is joined to, for example, the barrier layer 52 with an adhesive layer 55 interposed therebetween. The heat-sealable resin layer 53 included in the outer package film 50 is a layer that imparts a sealing property to the outer package film 50 by heat sealing. Examples of the heat-sealable resin layer 53 include resin films formed of a polyester-based resin such as a polyethylene terephthalate-based resin or a polybutylene terephthalate-based resin, a polyolefin-based resin such as a polyethylene-based resin or a polypropylene-based resin, or an acid-modified polyolefin-based resin obtained by graft-modifying the polyolefin-based resin with an acid such as maleic anhydride. From the viewpoint of sealability and strength, the thickness of the heat-sealable resin layer 53 is, for example, preferably 20 µm to 300 µm, more preferably 40 µm to 150 µm.

The outer package film 50 preferably includes one or more layers having a buffer function (hereinafter, referred to as "buffer layers") outside the heat-sealable resin layer 53, more preferably outside the barrier layer 52. The buffer layer may be laminated outside the base material layer 51, and the base material layer 51 may also function as a buffer layer. In a case where the outer package film 50 includes a plurality of buffer layers, the plurality of buffer layers may lie side-by-side, or may be laminated with the base material layer 51, the barrier layer 52, or the like interposed between the buffer layers.

The material constituting the buffer layer can be arbitrarily selected from materials having a cushioning property. The material having a cushioning property is, for example, rubber, a nonwoven fabric, or a foamed sheet. The rubber is, for example, natural rubber, fluororubber, or silicone rubber. The rubber hardness is preferably about 20 to 90. The material constituting a nonwoven fabric is preferably a material having excellent heat resistance. In a case where the buffer layer is formed from a nonwoven fabric, the lower limit of the thickness of the buffer layer is preferably 100 µm, still more preferably 200 µm, still more preferably 1000 µm. In a case where the buffer layer is formed from a nonwoven fabric, the upper limit of the thickness of the buffer layer is preferably 5000 µm, still more preferably 3000 µm. The thickness of the buffer layer is preferably in the range of 100 µm to 5000 µm, 100 µm to 3000 µm, 200 µm to 5000 µm, 200 µm to 3000 µm, 1000 µm to 5000 µm, or 1000 µm to 3000 µm. The thickness of the buffer layer is most preferably in the range of 1000 µm to 3000 µm among these.

In a case where the buffer layer is formed from rubber, the lower limit of the thickness of the buffer layer is preferably 0.5 mm. In a case where the buffer layer is formed from rubber, the upper limit of the thickness of the buffer layer is preferably 10 mm, still more preferably 5 mm, still more preferably 2 mm. In a case where the buffer layer is formed from rubber, the thickness of the buffer layer is preferably in the range of 0.5 mm to 10 mm, 0.5 mm to 5 mm, or 0.5 mm to 2 mm.

In a case where the outer package film 50 includes a buffer layer, the buffer layer functions as a cushion, so that breakage of the outer package film 50 due to the impact of falling of the electrical storage device 10 or handling during manufacturing of the electrical storage device 10 is suppressed.

The lid 60 includes the cover 70 and the lid main body 80.

The cover 70 shown in Fig. 4 has, for example, a shape similar to a hollow cuboid. A space 79 is formed inside the cover 70. The material constituting the cover 70 can be arbitrarily selected. From the viewpoint of suitably forming a second seal portion 92 to be described later, the cover 70 preferably contains a metal material. Here, "containing a metal material" means that the content of the metal material is 50 mass% or more, preferably 80 mass% or more, more preferably 90 mass% or more, and still more preferably 95 mass% or more when the total amount of materials constituting the cover 70 is defined as 100 mass%. In other words, the materials constituting the cover 70 can contain materials other than the metal material in addition to the metal material. The metal material constituting the cover 70 can be arbitrarily selected. The metal material constituting the cover 70 is, for example, aluminum, an aluminum alloy, nickel, copper, or a copper alloy. For example, in a case where the electrode assembly 20 is a lithium ion battery, the cover 70 connected to the positive electrode is preferably formed from aluminum or an aluminum alloy. The cover 70 connected to the negative electrode is preferably formed from nickel, copper, or a copper alloy. The material constituting the cover 70 connected to the negative electrode may be copper plated with nickel. The material constituting the cover 70 may include a recycled metal material. In the present embodiment, the cover 70 is formed only from a metal material. Since the cover 70 contains a metal material, the cover 70 also has a function as an electrode terminal. Therefore, the configuration of the electrical storage device 10 can be simplified. In a case where the cover 70 contains a metal material, the cover 70 preferably has the corrosion-resistant film described in the barrier layer 52.

In another example, the cover 70 may contain a resin material. Here, "containing a resin material" means that the content of the resin material is 50 mass% or more, preferably 80 mass% or more, more preferably 90 mass% or more, and still more preferably 95 mass% or more when the total amount of materials constituting the cover 70 is defined as 100 mass%. In other words, the materials constituting the cover 70 can contain materials other than the resin material in addition to the resin material.

Specific examples of the resin include resins such as polyester, polyolefin, polyamide, an epoxy resin, an acrylic resin, a fluororesin, polyurethane, a silicone resin, and a phenol resin, and thermoplastic resins such as modified products of these resins. The resin material may be a mixture of these resins, a copolymer of these resins, or a modified product of the copolymer. Among them, the resin material is preferably a heat-sealable resin such as polyester or polyolefin, and more preferably polyolefin. In a case where the resin material is a resin, a joining portion 80B may be molded by any molding method.

The resin material contained in the material constituting the cover 70 is preferably an olefin-based random copolymer, more preferably contains a resin containing a polyolefin backbone as a main component, still more preferably contains a polyolefin as a main component, and still more preferably contains polypropylene as a main component. The polyolefin may be an acid-modified polyolefin. The resin material contained in the material constituting the cover 70 preferably contains a plurality of kinds of amide-based lubricants. In the resin material contained in the material constituting the cover 70, it is preferable that the plurality of amide-based lubricants further contain an unsaturated fatty acid amide in addition to the saturated fatty acid amide. The resin material contained in the material constituting the cover 70 may be a polyolefin resin to which a propylene-based elastomer having a melting point higher than 150°C is added.

Specific examples of the polyester include polyethylene terephthalate, polybutylene terephthalate, polyethylene naphthalate, polybutylene naphthalate, polyethylene isophthalate, and copolyesters. Examples of the copolyester include copolyesters having ethylene terephthalate as a main repeating unit. Specific examples thereof include copolymer polyesters that are polymerized with ethylene isophthalate and include ethylene terephthalate as a main repeating unit (hereinafter, abbreviated as follows after polyethylene(terephthalate/isophthalate)), polyethylene(terephthalate/adipate), polyethylene(terephthalate/sodium sulfoisophthalate), polyethylene(terephthalate/sodium isophthalate), polyethylene (terephthalate/phenyl-dicarboxylate), and polyethylene(terephthalate/decane dicarboxylate). Among these, the resin material is preferably polybutylene terephthalate from the viewpoint of enhancing heat resistance and pressure resistance.

Specific examples of polyolefin include polyethylenes such as low-density polyethylene, medium-density polyethylene, high-density polyethylene and linear low-density polyethylene; ethylene-α-olefin copolymers; polypropylene such as homopolypropylene, block copolymers of polypropylene (for example, block copolymers of propylene and ethylene) and random copolymers of polypropylene (for example, random copolymers of propylene and ethylene); propylene-α-olefin copolymers; and terpolymers of ethylene-butene-propylene. The polyolefin resin in the case of a copolymer may be a block copolymer or a random copolymer. Among them, the resin material is preferably polypropylene because it is excellent in heat-sealability and electrolytic solution resistance.

The resin as the resin material may contain a filler as necessary. Specific examples of the filler include glass beads, graphite, glass fiber, and carbon fiber. By the resin as the resin material containing the filler, deformation resistance of the joining portion 80B against a temperature change can be improved.

The melt mass flow rate of the resin material contained in the material constituting the cover 70 is preferably in the range of 1 g/10 min to 100 g/10 min, and more preferably in the range of 5 g/10 min to 80 g/10 min. The melt mass flow rate is measured on the basis of JIS K7210-1:2014. The measurement temperature for melt mass flow rate is 230°C.

The cover 70 has a first surface 70X and a second surface 70Y. The first surface 70X faces the electrode assembly 20. An opening part 70Z is formed substantially entirely in the first surface 70X. The second surface 70Y is a surface on a side opposite to the first surface 70X. An opening part 70YA into which the lid main body 80 to be described later is fitted is formed in the second surface 70Y. The opening part 70YA penetrates the second surface 70Y. The shape of the opening part 70YA in front view can be arbitrarily selected according to the shape of the lid main body 80. The shape of the opening part 70YA may be a square, a rectangle, a polygon of a triangle or more, a circle, or an ellipse. In the present embodiment, the shape of the opening part 70YA in front view is a rectangle. The corners of the opening part 70YA are preferably rounded off by R processing. In a case where the cover 70 contains a resin material, from the viewpoint of suitably joining the lid main body 80, an adhesive film that can be joined to a metal material and a resin material is preferably joined to at least a part of the inner peripheral surface of the opening part 70YA. In another example, in a case where the cover 70 contains a resin material, from the viewpoint of suitably joining the lid main body 80, at least a part of a portion of the cover 70 corresponding to the inner peripheral surface of the opening part 70YA preferably has a layer that can be joined to a metal material.

The cover 70 includes an upper portion 71, lateral portions 72 and 73, a lower portion 74, and a protrusion 70A. The upper portion 71 forms the upper surface of the lid 60. The upper portion 71 extends in a first direction (LR direction in the present embodiment) in front view of the lid 60. The lateral portion 72 and the lateral portion 73 are connected to the upper portion 71 and form the lateral surfaces of the lid 60. The lateral portion 72 and the lateral portion 73 extend in a second direction (UD direction in the present embodiment) crossing the first direction in front view of the lid 60. In the present embodiment, the first direction and the second direction orthogonally cross each other in front view of the lid 60. The first direction and the second direction are not required to orthogonally cross each other in front view of the lid 60. The lower portion 74 forms the lower surface of the lid 60. The lower portion 74 extends in the first direction (LR direction in the present embodiment) in front view of the lid 60.

The protrusion 70A protrudes from the upper portion 71, the lateral portions 72 and 73, and the lower portion 74 to the inside of the cover 70. The protrusion 70A defines a portion covering the lid main body 80, in other words, the opening part 70YA. The protrusion amount of the protrusion 70A from the upper portion 71, the lateral portions 72 and 73, and the lower portion 74 can be arbitrarily selected. As the protrusion amount of the protrusion 70A from the upper portion 71, the lateral portions 72 and 73, and the lower portion 74 is larger, the opening area of the opening part 70YA is smaller. In other words, as the protrusion amount of the protrusion 70A from the upper portion 71, the lateral portions 72 and 73, and the lower portion 74 is smaller, the opening area of the opening part 70YA is larger. In the cover 70, the protrusion 70A may be omitted.

The cover 70 further includes boundaries 75, 76, 77, and 78. The boundary 75 is a boundary between the upper portion 71 and the lateral portion 72. The boundary 76 is a boundary between the upper portion 71 and the lateral portion 73. The boundary 77 is a boundary between the lower portion 74 and the lateral portion 72. The boundary 78 is a boundary between the lower portion 74 and the lateral portion 73. The shapes of the boundaries 75 to 78 may be angular, or may be rounded off by R processing. In the present embodiment, the boundaries 75 to 78 are angular.

The lid main body 80 shown in Fig. 5 contains a metal material. The definition of "containing a metal material" and the specifications about the metal material constituting the lid main body 80 are the same as those of the cover 70. The lid main body 80 may contain a resin material. The definition of "containing a resin material" and the specifications about the resin material constituting the lid main body 80 are the same as those of the cover 70. At least one of the cover 70 and the lid main body 80 contains a metal material. In the present embodiment, the cover 70 and the lid main body 80 contain a metal material. The lid main body 80 has a first surface 81, a second surface 82, and a cover portion 83. The first surface 81 faces the electrode assembly 20. The first surface 81 is joined to an end part of the current collector (not shown) of the electrode assembly 20 by welding or the like, for example. The second surface 82 is a surface on a side opposite to the first surface 81. An electrode terminal may be connected to the second surface 82. In a case where the lid main body 80 contains a metal material, the lid main body 80 preferably has the corrosion-resistant film described in the barrier layer 52.

The cover portion 83 is connected to the first surface 81 and the second surface 82, and at least a part of the cover portion 83 is covered with the cover 70. In the present embodiment, by fitting the lid main body 80 into the opening part 70YA of the cover 70, the entire cover portion 83 is covered with the inner peripheral surface of the opening part 70YA. In a state where the lid main body 80 is fitted into the opening part 70YA of the cover 70, a part of the cover portion 83 may be exposed from the cover 70. The lid main body 80 may also be fitted into the opening part 70Z.

The cover portion 83 includes a first cover portion 83A, a second cover portion 83B, a third cover portion 83C, and a fourth cover portion 83D. The first cover portion 83A forms the upper surface of the lid main body 80. The first cover portion 83A extends in a first direction (LR direction in the present embodiment) in front view of the lid main body 80. The second cover portion 83B and the third cover portion 83C are connected to the first cover portion 83A and form the lateral surfaces of the lid main body 80. The second cover portion 83B and the third cover portion 83C extend in a second direction (UD direction in the present embodiment) crossing the first direction in front view of the lid main body 80. In the present embodiment, the first direction and the second direction orthogonally cross each other in front view of the lid main body 80. The first direction and the second direction are not required to orthogonally cross each other in front view of the lid main body 80. The fourth cover portion 83D forms the lower surface of the lid main body 80. The fourth cover portion 83D extends in the first direction (LR direction in the present embodiment) in front view of the lid main body 80.

The cover portion 83 further includes boundaries 84, 85, 86, and 87. The boundary 84 is a boundary between the first cover portion 83A and the second cover portion 83B. The boundary 85 is a boundary between the first cover portion 83A and the third cover portion 83C. The boundary 86 is a boundary between the fourth cover portion 83D and the second cover portion 83B. The boundary 87 is a boundary between the fourth cover portion 83D and the third cover portion 83C. The shapes of the boundaries 84 to 88 may be angular, or may be rounded off by R processing. In the present embodiment, the boundaries 84 to 87 are angular.

In a case where the lid 60 has a plate shape as a whole, the lid 60 is preferably thick to some extent to suppress deformation of the outer packaging 40 even in a case where the electrical storage devices 10 are stacked on one another. The minimum value of the thickness of the cover 70 in the FB direction is, for example, 1.0 mm, more preferably 3.0 mm, and still more preferably 4.0 mm. The maximum value of the thickness of the cover 70 of the lid 60 is, for example, 20 mm, more preferably 15 mm, and still more preferably 10 mm. The maximum value of the thickness of the cover 70 of the lid 60 may be 20 mm or more. The thickness of the cover 70 of the lid 60 is preferably in the range of 1.0 mm to 20 mm, 1.0 mm to 15 mm, 1.0 mm to 10 mm, 3.0 mm to 20 mm, 3.0 mm to 15 mm, 3.0 mm to 10 mm, 4.0 mm to 20 mm, 4.0 mm to 15 mm, or 4.0 mm to 10 mm. The thickness of the cover 70 of the lid 60 may vary depending on a portion of the lid 60. In a case where the thickness of the cover 70 of the lid 60 varies depending on a portion, the thickness of the thickest portion of the cover 70 of the lid 60 is defined as a thickness of the cover 70 of the lid 60.

In the present embodiment, a first seal portion 91 is formed by heat-sealing the surfaces of the outer package film 50 which face each other (heat-sealable resin layers 53).

The first seal portion 91 includes a portion where a first edge 50A and a second edge 50B of the outer package film 50 shown in Fig. 3 are caused to overlap one another. The first seal portion 91 extends in a longitudinal direction (FB direction) of the outer packaging 40. In the outer packaging 40, a position at which the first seal portion 91 is formed can be arbitrarily selected. In the present embodiment, a root 91X of the first seal portion 91 is preferably located on an edge 43 of a boundary between the first surface 41A and the second surface 42A of the outer packaging 40. The root 91X of the first seal portion 91 may be located on an arbitrary surface of the outer packaging 40. From the viewpoint of configuring the electrical storage device 10 in a small size, the first seal portion 91 is preferably folded on, for example, the first surface 41A or the second surface 42A of the outer packaging 40 when the electrical storage device 10 is used.

In the present embodiment, the second seal portion 92 (see Figs. 6 and 7) is formed by sandwiching a portion including the end part of the outer package film 50 in the FB direction between the inner peripheral surface of the opening part 70YA of the cover 70 and the cover portion 83.

As shown in Fig. 7, in the second seal portion 92, the barrier layer 52 of the outer package film 50 and a portion containing a metal material of the lid 60 are directly joined. In the present embodiment, "directly joined" means that the barrier layer 52 of the outer package film 50 and the portion containing a metal material of the lid 60 are joined without other elements interposed therebetween. In the present embodiment, the cover 70 and the lid main body 80 contain a metal material. Therefore, in the second seal portion 92, the barrier layer 52 of the outer package film 50 is directly joined to the cover 70 and the lid main body 80. The barrier layer 52 of the outer package film 50, the cover 70, and the lid main body 80 are joined to each other by metal welding, for example. The metal welding is, for example, arc welding, TIG welding, spot welding, brazing, gas welding, laser welding, or the like. The barrier layer 52 of the outer package film 50, the cover 70, and the lid main body 80 may also be joined to each other by ultrasonic welding, for example. The barrier layer 52 of the outer package film 50 may also be directly joined to the upper portion 71, the lateral portions 72 and 73, and the lower portion 74 of the cover 70. In this case, the cover 70 and the lid main body 80 may be joined by metal welding, caulking, or using an adhesive. In Fig. 7, the adhesive layers 54 and 55 are omitted for simplification of the drawings.

In the example shown in Fig. 7, in a portion of the outer package film 50 constituting the second seal portion 92, in other words, in a portion of the outer package film 50 joined to the cover 70 and the lid main body 80, the base material layer 51 and the heat-sealable resin layer 53 are not laminated on the barrier layer 52. That is, the portion of the outer package film 50 constituting the second seal portion 92 is a single layer of the barrier layer 52.

### <1-2. Method for manufacturing electrical storage device>

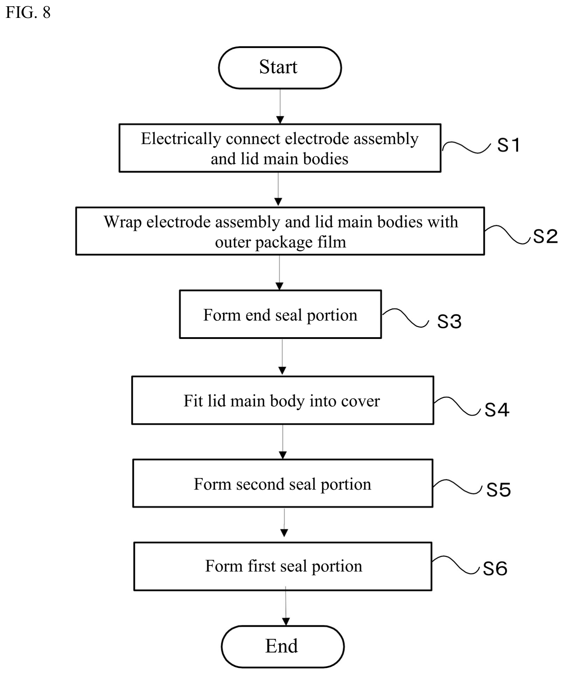

Fig. 8 is a flowchart showing an example of a method for manufacturing the electrical storage device 10. The method for manufacturing the electrical storage device 10 includes, for example, a first step, a second step, a third step, a fourth step, a fifth step, and a sixth step. The first to sixth steps are carried out by, for example, a manufacturing apparatus of the electrical storage device 10. At least a part of the first to sixth steps may be carried out by an operator. Note that the first to sixth steps are merely convenient labels for the steps in the method for manufacturing the electrical storage device 10 and do not necessarily mean the order of the steps. The order of the following steps can be arbitrarily changed.

In the first step of Step S1, the manufacturing apparatus disposes a pair of the lid main bodies 80 on the sides of the electrode assembly 20, and electrically connects the electrode assembly 20 and the lid main bodies 80.

The second step of Step S2 is carried out later than the first step. In the second step, the manufacturing apparatus wraps the electrode assembly 20 and the pair of lid main bodies 80 with the outer package film 50.

The third step of Step S3 is carried out later than the second step. In the third step, an end seal portion is formed. The end seal portion is a portion formed by joining a predetermined range including both end parts in the LR direction in a portion of the outer package film 50 where the first seal portion 91 is to be formed. The end seal portion is folded toward the first surface 41A or the second surface 42A.

The fourth step of Step S4 is carried out later than the third step. In the fourth step, the manufacturing apparatus fits the lid main body 80 into the opening part 70YA of the cover 70. When the fourth step is completed, the portion including the end part of the outer package film 50 in the FB direction and the end seal portion are sandwiched between the inner peripheral surface of the opening part 70YA of the cover 70 and the cover portion 83 of the lid main body 80.

The fifth step of Step S5 is carried out later than the fourth step. In the fifth step, the manufacturing apparatus forms the second seal portion 92 by welding the cover 70, the lid main body 80, and the outer package film 50. Since the joining of the cover 70, the lid main body 80, and the outer package film 50 can be completed in one step, the electrical storage device 10 can be easily manufactured.

The sixth step of Step S6 is carried out earlier or later than the fifth step. In the sixth step, the manufacturing apparatus forms the first seal portion 91 by heat-sealing the heat-sealable resin layer 53 in a portion including the first edge 50A of the outer package film 50 and the heat-sealable resin layer 53 in a portion including the second edge 50B of the outer package film 50.

### <1-3. Action and effect of electrical storage device>

In the electrical storage device 10, since the barrier layer 52 of the outer package film 50 and the portion containing a metal material of the lid 60 are directly joined by welding, ingress of moisture into the outer packaging 40 from the second seal portion 92 is suppressed. Therefore, the electrical storage device 10 has a high moisture barrier property.

### [2. Modifications]

The above-described embodiment is an example of possible forms of an electrical storage device, an outer package film, and a method for manufacturing an electrical storage device according to the present invention, and is not intended to limit the forms thereof. The electrical storage device, the outer package film, and the method for manufacturing an electrical storage device according to the present invention may have a form different from that exemplified in the embodiment. An example thereof is a form in which a part of the configuration of the embodiment is replaced, changed or omitted, or a form in which a new configuration is added to the embodiment. Some examples of modifications of the embodiment will be described below. Note that the following modifications can be combined as long as they are not technically contradictory.

### <2-1. First modification>

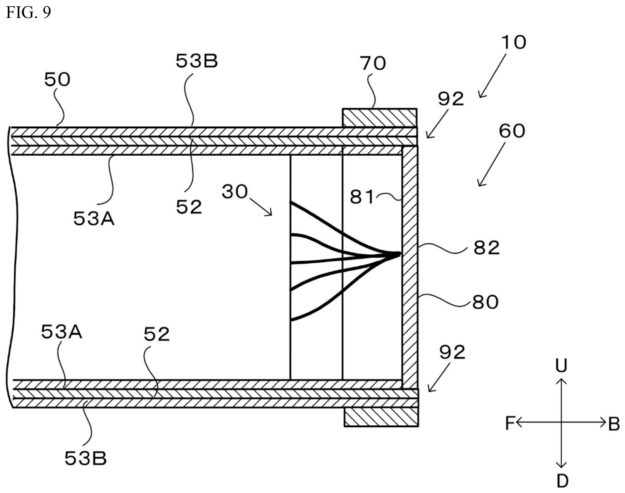

In the above-described embodiment, the cover 70 may contain a resin material, and the lid main body 80 may contain a metal material. Fig. 9 is a sectional view of an electrical storage device 10 of a first modification. In the first modification, the innermost layer and the outermost layer of the outer package film 50 are preferably heat-sealable resin layers 53A and 53B. In a portion of the outer package film 50 directly joined to the lid main body 80 in the second seal portion 92, the heat-sealable resin layer 53A which is the innermost layer is preferably partially removed. In the example shown in Fig. 9, in a portion of the outer package film 50 directly joined to the lid main body 80 in the second seal portion 92, the heat-sealable resin layer 53A which is the innermost layer is partially removed, and the barrier layer 52 is exposed. In the second seal portion 92, the barrier layer 52 of the outer package film 50 and the lid main body 80 are joined to each other by welding. In the second seal portion 92, the heat-sealable resin layer 53B which is the outermost layer of the outer package film 50 and the cover 70 may be joined to each other by, for example, heat sealing. The first seal portion 91 is preferably formed by heat-sealing the heat-sealable resin layer 53A and the heat-sealable resin layer 53B. In the fourth step, it is not necessary to sandwich the end seal portion between the inner peripheral surface of the opening part 70YA of the cover 70 and the cover portion 83 of the lid main body 80, so that electrical storage device 10 can be easily manufactured.

### <2-2. Second modification>

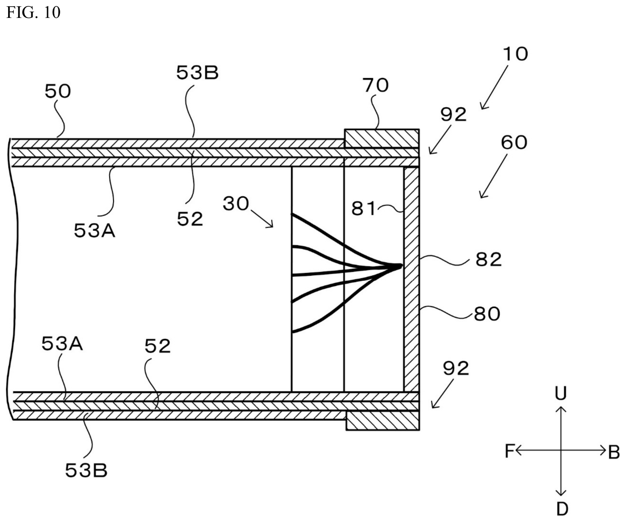

In the above-described embodiment, the cover 70 may contain a metal material, and the lid main body 80 may contain a resin material. Fig. 10 is a sectional view of an electrical storage device 10 of a second modification. In the second modification, the innermost layer and the outermost layer of the outer package film 50 are preferably heat-sealable resin layers 53A and 53B. In a portion of the outer package film 50 directly joined to the cover 70 in the second seal portion 92, the heat-sealable resin layer 53B which is the outermost layer is partially removed, and the barrier layer 52 is exposed. In the second seal portion 92, the barrier layer 52 of the outer package film 50 and the cover 70 are joined by welding. In the second seal portion 92, the heat-sealable resin layer 53A which is the innermost layer of the outer package film 50 and the lid main body 80 may be joined to each other by, for example, heat sealing.

### <2-3. Third modification>

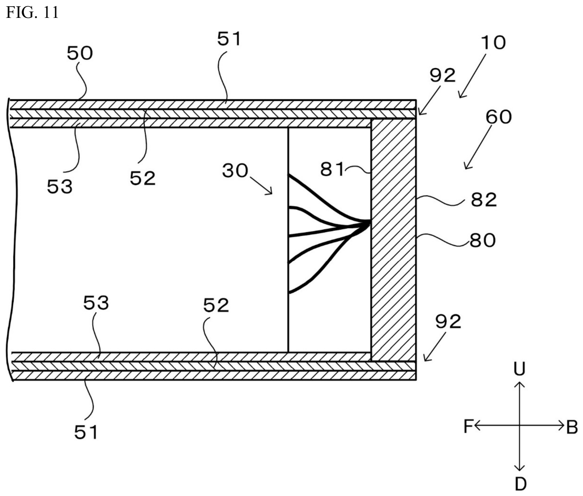

In the above-described embodiment, the lid 60 is not required to have the cover 70. Fig. 11 is a sectional view of an electrical storage device 10 of a third modification. In the third modification, the lid main body 80 contains a metal material. In a portion of the outer package film 50 directly joined to the lid main body 80 in the second seal portion 92, the heat-sealable resin layer 53 may be partially removed, and the barrier layer 52 may be exposed.

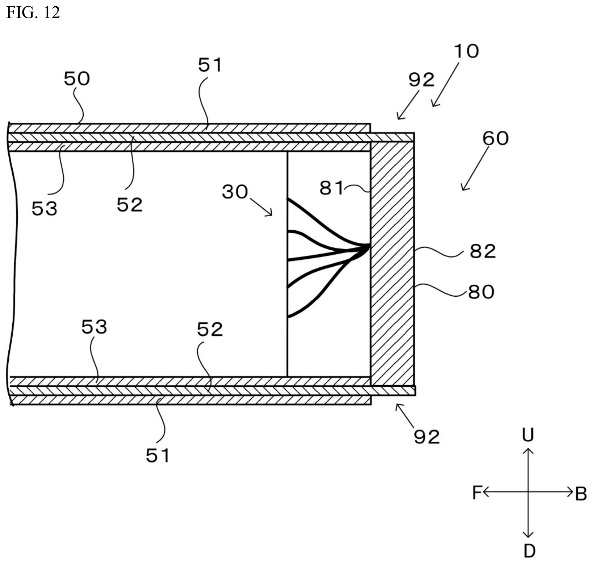

Fig. 12 is a sectional view of an electrical storage device 10 of another example of the third modification. In a portion of the outer package film 50 directly joined to the lid main body 80 in the second seal portion 92, the base material layer 51 and the heat-sealable resin layer 53 may be removed, and the portion may be a single layer of the barrier layer 52.

### <2-4. Fourth modification>

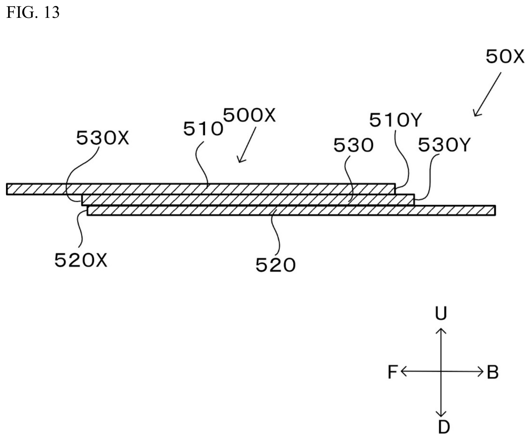

In the above-described embodiment, the configuration of the outer package film 50 can be changed. Fig. 13 is a sectional view showing an example of a layer configuration of an outer package film 50X included in an electrical storage device 10 of a fourth modification.

The outer package film 50X is a laminate film including a first barrier layer 510, a second barrier layer 520, and an insulating layer 530. The first barrier layer 510, the second barrier layer 520, and the insulating layer 530 are laminated so that the first barrier layer 510 and the second barrier layer 520 are not electrically connected to each other. In the fourth modification, the first barrier layer 510, the insulating layer 530, and the second barrier layer 520 are laminated in this order from the outside of the outer packaging 40 toward the electrode assembly 20. The first barrier layer 510 and the second barrier layer 520 contain a metal material.

The first barrier layer 510 is joined to the lid 60 connected to the positive electrode. From the viewpoint of enhancing the joining strength between the first barrier layer 510 and the lid 60 connected to the positive electrode, the metal material contained in the material constituting the first barrier layer 510 is preferably the same metal material as the metal material contained in the material constituting the lid 60 connected to the positive electrode. The second seal portion 92 includes an end part of the first barrier layer 510.

The second barrier layer 520 is joined to the lid 60 connected to the negative electrode. From the viewpoint of enhancing the joining strength between the second barrier layer 520 and the lid 60 connected to the negative electrode, the metal material contained in the material constituting the second barrier layer 520 is preferably the same metal material as the metal material contained in the material constituting the lid 60 connected to the negative electrode. The second seal portion 92 includes an end part of the second barrier layer 520.

The insulating layer 530 insulates the first barrier layer 510 and the second barrier layer 520 so that the first barrier layer 510 and the second barrier layer 520 are not electrically connected to each other. The material constituting the insulating layer 530 can be arbitrarily selected as long as it can insulate the first barrier layer 510 and the second barrier layer 520 from each other. The material constituting the insulating layer 530 is, for example, resin, elastomer, or ceramic. The ceramic is, for example, glass, an oxide, a nitride, a carbonate, or a hydroxide. The material constituting the insulating layer 530 may be a combination of a plurality of materials. From the viewpoint of suitably insulating the first barrier layer 510 and the second barrier layer 520, the material constituting the insulating layer 530 preferably contains an insulating filler.

The resin is, for example, a thermoplastic resin such as polyester, polyolefin, polyamide, epoxy resin, acrylic resin, fluororesin, polyurethane, silicon resin, phenol resin, and the like, fluororesin, and modified products of these resins. From the viewpoint of the moisture barrier property, it is preferable to use a thermoplastic resin such as fluororesin and modified products of fluororesin.

The ceramic is, for example, an oxide or a nitride. The oxide is, for example, magnesium oxide, silicon oxide, aluminum oxide, or tin oxide. These oxides have a moisture barrier property.

The nitride is, for example, aluminum nitride, boron nitride, or silicon nitride. From the viewpoint of the moisture barrier property, silicon nitride is preferably used.

The carbonate is, for example, magnesium carbonate. The hydroxide is, for example, magnesium hydroxide. Magnesium carbonate and magnesium hydroxide have a moisture barrier property.

The outer package film 50 preferably includes an overlapping portion 500X where the first barrier layer 510, the insulating layer 530, and the second barrier layer 520 overlap in plan view. In a case where the outer package film 50 includes the overlapping portion 500X, the moisture barrier property is enhanced by the first barrier layer 510 and the second barrier layer 520 even when the material constituting insulating layer 530 does not have a moisture barrier property. In the fourth modification, the overlapping portion 500X is formed so as to cover substantially the entire upper surface and lower surface of the electrode assembly 20.

The first barrier layer 510 extends further to a side of the lid 60 connected to the positive electrode than the second barrier layer 520 and the insulating layer 530 in the FB direction.

The second barrier layer 520 extends further to a side of the lid 60 connected to the negative electrode than the first barrier layer 510 and the insulating layer 530 in the FB direction. From the viewpoint of suppressing a short circuit between the second barrier layer 520 and the electrode assembly 20, another insulating layer is preferably laminated on the surface of the second barrier layer 520 opposite to the surface on which the insulating layer 530 is laminated.

From the viewpoint of suitably suppressing the first barrier layer 510 and the second barrier layer 520 from being electrically connected to each other, in the FB direction, an end part 530X of the insulating layer 530 on a side of the lid 60 connected to the positive electrode is preferably located closer to the lid 60 connected to the positive electrode than an end part 520X of the second barrier layer 520 on a side of the lid 60 connected to the positive electrode.

From the viewpoint of suitably suppressing the first barrier layer 510 and the second barrier layer 520 from being electrically connected to each other, in the FB direction, an end part 530Y of the insulating layer 530 on a side of the lid 60 connected to the negative electrode is preferably located closer to the lid 60Y connected to the negative electrode than an end part 510Y of the first barrier layer 510 on a side of the lid 60 connected to the negative electrode.

In the modification, since the first barrier layer 510 and the second barrier layer 520 are insulated by the insulating layer 530, the lid 60 connected to the positive electrode and the lid 60 connected to the negative electrode are not electrically connected.

### <2-5. Fifth modification>

In the above-described embodiment, the outer package film 50 of the electrical storage device 10 may protrude further outward than one of the two lids 60 in the FB direction. The electrode assembly 20 is sealed by the part of the outer package film 50 protruding further outward than the lid 60 being closed. The part of the outer package film 50 protruding further than the lid 60 may be folded inward such that outer surfaces of the outer package film 50 are in contact with each other like a gable top container or may be folded toward an arbitrary surface of the outer packaging 40 like a brick-shaped container.

### <2-6. Sixth modification>

In the above-described embodiment, the outer packaging 40 is not required to include one of the two lids 60. In this modification, the electrode assembly 20 is sealed by the part of the outer package film 50 protruding further outward than the electrode assembly 20 being closed at the part of the outer packaging 40 from which the lid 60 is omitted in the FB direction. The part of the outer package film 50 protruding further outward than the electrode assembly 20 may be folded like a gable top container or a brick-shaped container as in the fifth modification.

### <2-7. Seventh modification>

In the above-described embodiments, the outer contour shape of the outer packaging 40 can be arbitrarily changed. The outer contour shape of the outer packaging 40 may be a cylinder, a prism, or a cube.

### <2-8. Eighth modification>

Although the electrode assembly 20 is wrapped by one outer package film 50 in the above-described embodiments, the electrode assembly 20 may be wrapped by two or more outer package films 50.

### Reference Signs List

10 Electrical storage device
20 Electrode assembly
40 Outer packaging
50 Outer package film
53 Barrier layer
60 Lid
70, 470 Cover
80 Lid main body
92 Second seal portion (seal portion)

## Claims

1. An electrical storage device comprising:
an electrode assembly; and
an outer packaging that seals the electrode assembly, wherein
the outer packaging includes:
an outer package film that wraps the electrode assembly; and
a lid that seals the electrode assembly together with the outer package film, the outer package film includes a barrier layer containing a metal material,
the lid includes a portion containing a metal material, and
the barrier layer of the outer package film and the portion containing a metal material of the lid are directly joined.

2. The electrical storage device according to claim 1, wherein a portion of the outer package film joined to the portion containing a metal material of the lid is a single layer of the barrier layer.

3. The electrical storage device according to claim 1, wherein
the outer package film includes another layer laminated on the barrier layer, and
a portion of the outer package film joined to the portion containing a metal material of the lid is a portion where the barrier layer is partially exposed from the other layer.

4. The electrical storage device according to any one of claims 1 to 3, wherein,
the lid includes:
a cover; and
a lid main body joined to the cover,
at least one of the cover and the lid main body contains a metal material,
the outer packaging includes a seal portion where the outer package film is sandwiched between the cover and the lid main body, and
in the seal portion, the barrier layer of the outer package film is directly joined to a portion containing a metal material of the cover and the lid main body.

5. An outer package film used as an outer packaging of an electrical storage device, wherein
the outer packaging includes a lid containing a metal material,
the outer package film includes a barrier layer containing a metal material, and
a portion joined to a portion containing a metal material of the lid is a single layer of the barrier layer, or a portion where the barrier layer is partially exposed from another layer.

6. A method for manufacturing an electrical storage device,
the electrical storage device including:
an electrode assembly; and
an outer packaging that seals the electrode assembly,
the outer packaging including:
an outer package film that wraps the electrode assembly; and
a lid that seals the electrode assembly together with the outer package film, the outer package film including a barrier layer containing a metal material, and the lid including a portion containing a metal material,
the method comprising a step of directly joining the barrier layer of the outer package film and the portion containing a metal material of the lid.
